# EUROPÄISCHE PATENTANMELDUNG

(11) **EP 2 402 611 A2**
(43) Veröffentlichungstag der Anmeldung: **04.01.2012**
(21) Anmeldenummer: 11004508.5
(22) Anmeldetag: 01.06.2011
(51) Int. Cl.: F04C 15/00

(54) **Ladevorrichtung zur Verdichtung von Ladeluft für einen Verbrennungsmotor**

(30) Priorität: 02.07.2010 DE 102010025984
(71) Anmelder: Handtmann Systemtechnik GmbH & Co. KG, 88400 Biberach/Riß (DE)
(72) Erfinder: Hagel, Hubert, 88437 Maselheim-Sulmingen (DE); Licht, Jürgen, 88447 Warthausen (DE); Cölsch, Stefan, 88484 Gutenzell-Hürbel (DE); Joachim, Nusser, 88521 Ertingen (DE); Lechleiter, Andreas, 88737 Maselheim-Sulmingen (DE)
(74) Vertreter: Roth, Klaus

(57) **Zusammenfassung**

Es wird eine Ladevorrichtung zur Verdichtung von Ladeluft für einen Verbrennungsmotor mit einem Spiralverdichter vorgeschlagen, wobei eine Verdrängerspirale (5) zwischen einem vorderen und einem hinteren Lager der Laderwelle (6) über eine Exzenteranordnung mit der Laderwelle verbunden ist, wobei außerhalb eines Gehäuses (1) der Ladevorrichtung ein extern antreibbares Antriebselement, wie eine Riemenscheibe oder dergleichen vorgesehen ist und wobei die Laderwelle (6) mit dem extern antreibbaren Antriebselement mittels eines steuerbaren Kupplungsorgans verbindbar ist.

Die erfindungsgemäße Ladevorrichtung soll sich durch eine einfachere Lagerung und insbesondere durch ein kleiner dimensionierbares vorderes Lager auszeichnen. Dies wird dadurch erreicht, dass alle Verbindungen von Antriebs- und/oder Führungselementen für die Verdrängerspirale zwischen dem vorderen (2) und dem hinteren (3) Lager angeordnet sind.

## Beschreibung

Die Erfindung betrifft eine Ladevorrichtung zur Verdichtung von Ladeluft für einen Verbrennungsmotor nach dem Oberbegriff des Anspruchs 1.

Für den Einsatz an Verbrennungsmotoren sind verschiedene Ladevorrichtungen bekannt geworden. So gibt es sogenannte Turbolader, die über den Abgasstrom des Motors angetrieben werden. Darüber hinaus gibt es Ladevorrichtungen, die nach dem Verdrängerprinzip arbeiten. Unter den Verdrängermaschinen sind u. a. auch Vorrichtungen bekannt geworden, die mit einem Spiralverdichter arbeiten. In einem solchen Verdichter wird ein Verdrängerkörper entlang einem spiralförmigen Gehäuse bewegt. In der Regel ist der Verdrängerkörper ebenfalls spiralförmig und über einen Exzenter einer Antriebswelle angetrieben. Ladevorrichtungen mit Spiralverdichter wurden beispielsweise in den Druckschriften DE 10 2007 043 579 A1, DE 10 2007 043 595 B4, DE 26 03 462 oder EP 0 899 423 A1 beschrieben. In der DE 10 2009 017 201 A1 ist weiterhin eine Ladevorrichtung mit Schwingenlager für die Verdrängerspriale beschrieben.

Derartige Ladevorrichtungen, die nach dem Verdrängerprinzip arbeiten, werden in der Regel mechanisch an ein Antriebsorgan des Verbrennungsmotors gekoppelt. Üblicherweise sind Verbrennungsmotoren mit einem Riementrieb für Nebenaggregate versehen, so dass diese mittels einer Riemenscheibe in einen solchen Riementrieb integriert werden. Durch den Riementrieb werden große Querkräfte auf die Lagerwelle ausgeübt, so dass deren vorderes, der Riemenscheibe zugewandtes Lager entsprechend groß dimensioniert werden muss.

Für einen flexiblen Betrieb sind auch über Magnetkupplungen schaltbare Ladevorrichtungen mit den Druckschriften EP 0 557 598 B1 sowie EP 0 545 189 B1 bekannt geworden. Die in diesem Stand der Technik beschriebene Ladevorrichtung sind zwischen der Kupplung und dem vorderen, der Kupplung zugewandten Lager der Laderwelle mit einem weiteren Riementrieb versehen, um neben einer ersten, unmittelbar mit der Laderwelle verbundenen Exzenteranordnung eine zweite Exzenteranordnung für die Verdrängerspirale anzutreiben. Durch diesen zusätzlichen Riementrieb entstehen wiederum Querkräfte auf die Laderwelle, die sich auf die notwendige Dimensionierung des vorderen Lagers auswirken.

Aufgabe der Erfindung ist es daher, eine Ladevorrichtung dahingehend weiterzubilden, dass die Lagerung einfacher und insbesondere das vordere Lager kleiner dimensionierbar ist.

Diese Aufgabe wird ausgehend von einer Ladevorrichtung nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Erfindungsgemäß werden nunmehr alle Verbindungen der zwischen der Laderwelle und Verdrängerspirale wirkenden Antriebs- und/oder Führungselemente zwischen dem vorderen und dem hinteren Lager angeordnet.

Auf diese Weise wird der vom vorderen Lager zur Kupplung bzw. externen Antriebselement hinweisende Teil der Laderwelle von allen Querkräften, die durch derartige Antriebs- und Führungselemente ausgeübt werden können, befreit. Hierdurch wird die Lagerung, insbesondere auch die Dimensionierung des vorderen Lagers erfindungsgemäß vereinfacht.

Durch die oben angeführte Anordnung aller Antriebs- und Führungselemente der Verdrängerspirale wird eine Ladevorrichtung ermöglicht, bei der zwischen einem an der Laderwelle befestigten Mitnehmerelement und dem zum Mitnehmerelement hinweisenden Lager der Laderwelle keine Verteilergetriebeelemente für eine Kraft- oder Drehmomentabzweigung vorgesehen sind. Das freie Ende der Laderwelle mit Mitnehmerelement, beispielsweise in Form einer Mitnehmerscheibe, steht quasi ausgehend von dem der dem Mitnehmerelement benachbarten Lager der Laderwelle frei im Raum. Durch den Umstand, dass zwischen dem Mitnehmerelement und dem genannten Lager keinerlei Kräfte oder Drehmomente von der Laderwelle abgezweigt werden, sind die oben angeführten möglichen Querkräfte vermieden.

Bei einer erfindungsgemäßen Ladevorrichtung wird die Verdrängerspirale an seiner zweiten Exzenteranordnung durch eine Schwinge geführt, die in Zusammenwirkung mit der ersten Exzenteranordnung für die gewünschte Bewegung der Verdrängerspirale sorgt. Durch diese Art der Schwinge als Führungselement ergibt sich eine Zwangsführung ohne sogenannte Totpunkte. Es genügt für eine solche Zwangsführung der Verdrängerspirale, diese über die Laderwelle und die dort befindliche Exzenteranordnung anzutreiben.

In einer bevorzugten Ausführungsform wird das steuerbare Kupplungsorgan mittels einer Kupplungswelle mit dem Antriebselement verbunden. Das Antriebselement, das beispielsweise eine herkömmliche Riemenscheibe sein kann, verbindet dieses über die Kupplungswelle mit der Antriebsseite des Kupplungsorgans.

Dabei wird das Antriebselement mittels eines von der Laderwelle unabhängigen Lagers in einem Gehäuseteil der Ladevorrichtung gelagert. Durch diese Maßnahme können sämtliche Kräfte, die über das Antriebselement, z. B. die Riemenscheibe, auf die Ladevorrichtung übertragen werden, ohne Einwirkung auf die Laderwelle unmittelbar in das Gehäuse der Ladevorrichtung abgeleitet werden. Dies ist insbesondere im Hinblick auf eventuell auftretende Querkräfte von Bedeutung. Da mittels des Riementriebs über die Riemenscheiben in herkömmlichen Verbrennungsmotoren ein erhebliches Drehmoment auf die Nebenaggregate, insbesondere auch auf eine Ladevorrichtung gemäß der Erfindung zu übertragen sind, unterliegen derartige Riementriebe einer entsprechenden Vorspannung, die durch diese Vorspannung erhebliche Querkräfte erzeugen.

Durch die erforderlichen Drehzahlen einer Ladevorrichtung darf zumindest bei einer direkten Kopplung in den Riementrieb des Verbrennungsmotors die Riemenscheibe nicht zu groß dimensioniert sein, wodurch sich jedoch für die Drehmomentübertragung an einer Riemenscheibe kleine Hebelverhältnisse ergeben, die zur Erhöhung der Reibung zwischen Riemen und Riemenscheibe durch eine erhöhte Vorspannung im Riementrieb auszugleichen sind. Die oben angeführten Querkräfte sind daher aus konstruktiven Gründen nicht zu vermeiden.

Bei einer Lagerung des Antriebselementes unmittelbar in einem Gehäuseteil der Ladevorrichtung können die Querkräfte jedoch über das Gehäuse abgeleitet werden, sodass die Laderwelle, die den Verdrängerkörper antreibt, von derartigen Querkräften unbeeinträchtigt ist. Dies wiederum ermöglicht eine kompaktere Ausbildung der im Innern des Gehäuses vorgesehenen Lager für die Laderwelle, sodass ein größerer Bauraum für das bereitzustellende Verdrängungsvolumen zur Verfügung steht.

Bevorzugt wird auch die Kupplungswelle des steuerbaren Kupplungsorgans, unabhängig von der Laderwelle in einem Gehäuseteil gelagert. Das steuerbare Kupplungsorgan, das vorteilhafterweise über die Kupplungswelle drehbar gelagert wird, kann die wesentliche Masse der gesamten Kupplung beinhalten. Demnach ist das Lager für die Kupplungswelle entsprechend auszulegen und zu dimensionieren. Erfolgt auch diese Lagerung unmittelbar an einem Gehäuseteil, wird auch durch diese Maßnahme die Lagerung der Laderwelle nicht beeinträchtigt. Hierdurch wird wiederum der Innenraum des Ladergehäuses weitgehend für die Bereitstellung des entsprechenden Verdrängervolumens nutzbar.

In einer besonders vorteilhaften Ausführungsform wird ein gemeinsames Lager für die Kupplungswelle, für das steuerbare Kupplungsorgan und für das extern antreibbare Antriebselement vorgesehen. Auf diese Weise kann mit einem einzigen gemeinsamen, entsprechend stabil ausgebildeten Lager eine Ableitung aller Kräfte, sowohl der Querkräfte durch den Riementrieb als auch der durch die massebehafteten Teile des steuerbaren Kupplungsorgans sowie der Kupplungswelle erzeugten Kräfte in das Gehäuse erfolgen, ohne dass die Lagerung der Laderwelle und des damit verbundenen Verdrängerkörpers berührt wird.

Das Gehäuseteil, das ein Lager für das Antriebselement und/oder die Kupplungswelle trägt, wird vorteilhafterweise als separat montierbares, flanschartiges Bauteil ausgestaltet. Dies bietet erhebliche Vorteile für die Fertigung und Montage einer erfindungsgemäßen Ladevorrichtung. Über entsprechende Schraubverbindungen können alle auftretenden Kräfte, die über das Antriebselement oder die rotierenden Teile des steuerbaren Kupplungsorgans vom dementsprechend stabil ausgestalteten Lager auf das flanschartige Gehäuseteil aufgebracht werden, an das Gehäuse der Ladevorrichtung abgeleitet werden. Grundsätzlich können auch anderweitige kraftübertragende Verbindungen zwischen dem Gehäuse und dem flanschartigen Gehäuseteil vorgesehen werden, beispielsweise Passstifte, Bolzen oder dergleichen.

In einer Weiterbildung der Erfindung wird die Laderwelle mit wenigstens einer Mitnehmerscheibe versehen, an der das steuerbare Kupplungsorgan kraftschlüssig angreifen kann. In einer besonderen Ausführungsform wird der Kraftschluss über Reibschluss erzielt, d. h. das steuerbare Kupplungsorgan umfasst eine mit einer Reibfläche ausgestaltete zur Mitnehmerscheibe komplementäre Scheibe, die in axialer Richtung der Laderwelle mit der Mitnehmerscheibe der Laderwelle verspannbar ist. Gegebenenfalls können noch ein oder mehrere Kupplungslamellen dazwischen vorgesehen werden. Die Kraftübertragung zwischen dem steuerbaren Kupplungsorgan und der Laderwelle kann auf unterschiedliche Weise entsprechend bekannten herkömmlichen Kupplungsmechanismen vorgenommen werden. Grundsätzlich ist auch ein Kraftschluss über eine formschlüssige Kupplung denkbar, beispielsweise über eine Hirth-Verzahnung oder dergleichen. Allerdings ist es vorteilhaft, wenn die Ladevorrichtung bei drehendem Antriebselement zuschaltbar ist, was im Falle eines Reibschlusses ohne Zwischenschaltung weiterer Elemente zur Drehmomentwandlung möglich ist.

Wie bereits oben erwähnt, kann in einer erfindungsgemäßen Ladevorrichtung die Laderwelle separat von der Kupplungswelle und insgesamt vom Kupplungsorgan gelagert werden. Diese Lagerung wird bevorzugt im Innern des Ladergehäuses vorgenommen. Spirallader werden vorteilhafterweise im Wesentlichen symmetrisch zu einer quer zur Laderwelle stehenden Symmetrieebene aufgebaut. Spirallader können hierzu so ausgestaltet werden, dass das Spiralgehäuse zur Erzeugung des Verdrängervolumens durch eine in der Symmetrieebene liegende Trennwand unterteilt ist, wobei auf beiden Seiten dieser Trennwand ein spiralförmiger Verdrängerkörper beweglich angeordnet ist. Diese Trennwand ist mit Durchlässen versehen, sodass beide Seiten des Spiralladers aus einer gemeinsamen Luftzufuhr gespeist werden und in eine gemeinsame Abluftleitung abführen. Dieser symmetrische Aufbau eines Spiralladers ermöglicht die beidseitige Lagerung der Laderwelle und dazwischen eine zentrale Lagerung eines Exzenters der Laderwelle im Bereich der Trennwand.

Wird nun ein erfindungsgemäßer Lader mit einem Kupplungsorgan versehen, das die Laderwelle selbst frei von allen Querkräften hält und zudem auch den größten Teil der massebehafteten Teile der Kupplung anderweitig lagert, so können die Lager der Laderwelle auch unter Verwendung einer steuerbaren Kupplung kompakt gehalten und zudem auf beiden Seiten der Laderwelle gleich ausgelegt werden.

Dementsprechend werden in einer vorteilhaften Ausführungsform der Erfindung alle zur Betätigung der Kupplung vorhandenen Bauteile aufseiten des steuerbaren Kupplungsorgans angeordnet und gelagert, sodass aufseiten der Laderwelle lediglich ein für die Kraftübertragung erforderliches Mitnehmerelement, beispielsweise eine Mitnehmerscheibe, vorgesehen ist. Diese Mitnehmerscheibe kann aus entsprechend leichtem Material, beispielsweise Magnesium, Titan, Karbon oder entsprechendem Material gefertigt werden.

Eine Problematik bei einer Ladevorrichtung für Verbrennungsmotoren liegt darin, dass diese in der Regel einer noch größeren Drehzahl als der des Verbrennungsmotors unterworfen sind. Drehzahlen, die um einen Faktor 2 bis 3 oberhalb der Drehzahl des Verbrennungsmotors liegen, sind durchaus möglich. Dementsprechend aufwendig ist die Mechanik, die für einen möglichst vibrationsarmen Lauf des Spiralladers sorgen muss. Um diese Mechanik und insbesondere auch den Masseausgleich zu ermöglichen, ist es daher grundsätzlich von Vorteil, alle bewegten Teile eines solchen Laders in Leichtbauweise zu fertigen.

Wird nunmehr eine entsprechende Ladevorrichtung erfindungsgemäß mit einer Kupplung versehen, so kann diese Leichtbauweise sowie der grundsätzliche Aufbau eines herkömmlichen Laders beibehalten werden, wenn alle Komponenten, die aufgrund des Kupplungsaufbaus eine entsprechende zusätzliche Masse mit sich bringen bzw. über den Riementrieb entsprechenden Querkräften unterworfen sind, unmittelbar am Gehäuse oder am Gehäuseteil gelagert werden, ohne dass die Laderwelle und damit der innere Aufbau des Laders beeinträchtigt wird.

Ein Ausführungsbeispiel der Erfindung ist in der Zeichnung dargestellt und wird nachfolgend anhand der Figur näher erläutert.

Im Einzelnen zeigen:
- Figur 1: einen Spirallader ohne erfindungsgemäße Kupplung in Schnittdarstellung,
- Figur 2: einen Ausschnitt eines Spiralladers mit erfindungsgemäßer Kupplung ebenfalls in Schnittdarstellung,
- Figur 3: eine Draufsicht auf eine geöffnete Ladevorrichtung in einer ersten Betriebsstellung und
- Figur 4: eine Draufsicht gemäß Figur 3 in einer zweiten Betriebsstellung.

Das Ladergehäuse 1 umfasst zwei äußere Laderwellenlager 2, 3 sowie ein dazwischen angeordnetes Exzenterlager 4, über das eine Verdrängerspirale 5 exzentrisch geführt wird, wobei der Antrieb über die Laderwelle 6 erfolgt.

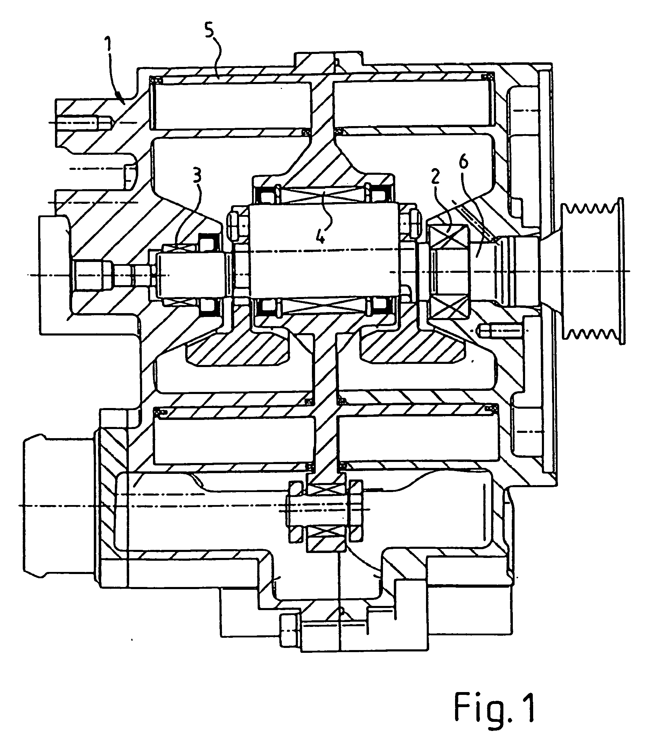

In der Ausführung gemäß Fig. 1 ist ersichtlich, dass die Laderwelle 6 eine Riemenscheibe 9 trägt. Das Laderwellenlager 2 ist daher deutlich größer dimensioniert und für erheblich größere Querkräfte ausgelegt, als das gegenüberliegende Laderwellenlager 3. Das Laderwellenlager 2 benötigt einen entsprechend großen Bauraum.

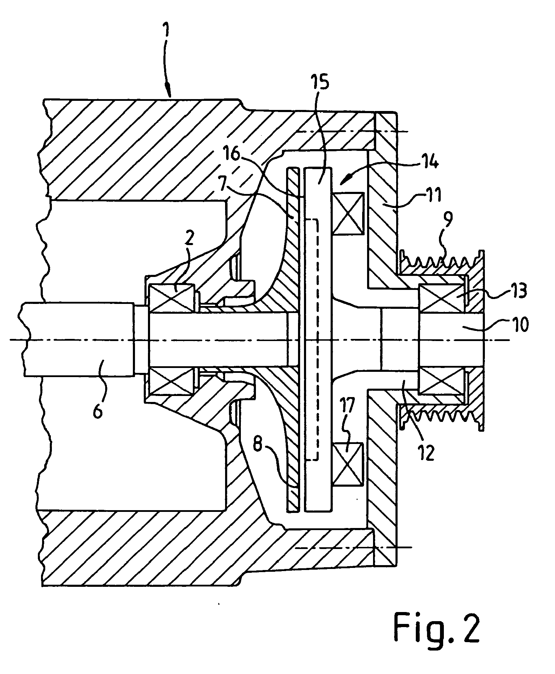

In der Ausführung gemäß Fig. 2 mit erfindungsgemäßer Kupplung ist die Laderwelle 6 mit einer Mitnehmerscheibe 7 versehen, die in ihrem äußeren Bereich eine Reibfläche 8 aufweist. Die Mitnehmerscheibe 7 kann ebenso wie alle sonstigen bewegten Teile der Ladevorrichtung in Leichtbauweise, insbesondere auch aus einem Leichtmetall gefertigt sein.

Erfindungsgemäß ist nunmehr die Laderwelle 6 nicht mehr unmittelbar über die Riemenscheibe 9 im Riementrieb eines Verbrennungsmotors angetrieben.

Für den Antrieb ist vielmehr die Riemenscheibe 9 auf einer Kupplungswelle 10 montiert, die in einem Gehäuseflansch 11 mit einem Lagerstutzen 12 über ein Kupplungslager 13 gelagert ist. Der Gehäuseflansch 11 ist über nicht näher dargestellte Schraubverbindungen fest am Gehäuse 1 fixierbar.

Die Kupplungswelle 10 trägt auf der dem Ladergehäuse 1 zugewandten Seite des Gehäuseflansches 11 ein steuerbares Kupplungsorgan 14. Das Kupplungsorgan 14 umfasst eine Kupplungsscheibe 15 mit einem Reibbelag 16. Die Kupplungsscheibe 15 ist über den Reibbelag 16 in der Lage, bei entsprechendem Reibschluss die Mitnehmerscheibe 7 anzutreiben.

Der Reibschluss kann auf nicht näher dargestellte Weise hergestellt werden, beispielsweise auch unter Zwischenschaltung einer oder mehrerer Kupplungslamellen. Die Betätigung des Kupplungsorgans erfolgt über schematisch dargestellte Betätigungsorgane 17. Die Betätigungsorgane des Kupplungsorgans 14 können beispielsweise auf herkömmliche Weise ausgestaltet werden.

Bevorzugt wird die Mitnehmerscheibe 7 mit der Kupplungsscheibe 15 permanent, beispielsweise mittels Federdrucks, verspannt und aktiv durch das Betätigungsorgan gelöst. Dies kann in herkömmlicher Bauweise, beispielsweise mit Hilfe einer nicht näher dargestellten Tellerfeder erfolgen. Das Ausrücken der Kupplung kann sodann über ein entsprechendes steuerbares Betätigungsorgan, beispielsweise einen Elektromagneten, einen Servomotor oder dergleichen erfolgen, wobei durch entsprechenden Gegendruck zur vorgespannten Feder die Kupplung geöffnet werden kann.

Selbstverständlich ist auch eine umgekehrte Bauweise, in der die Kupplung aktiv geschlossen und passiv geöffnet ist, denkbar.

Die konkrete Ausgestaltung der Kupplung bzw. deren Betätigungsorgane ist bei der vorliegenden Erfindung von untergeordneter Bedeutung. Wichtig ist vielmehr, dass der wesentliche Teil der massebehafteten Kupplungsorgane und auch die Riemenscheibe 9 separat von der Laderwelle 6 gelagert ist, wie dies im dargestellten Ausführungsbeispiel über das Kupplungslager 13 der Fall ist. Dieses Kupplungslager 13 kann entsprechend stark dimensioniert und ausgelegt sein, sodass darin nicht nur die wesentliche Masse der Kupplung gelagert ist, sondern zugleich auch die durch den Riementrieb aufgebrachten Querkräfte in das Ladergehäuse 1 abgeleitet werden.

Im dargestellten Ausführungsbeispiel ist gut erkennbar, dass das freie Ende der Laderwelle, das die Mitnehmerscheibe 7 trägt, zwischen der Mitnehmerscheibe 7 und dem der Mitnehmerscheibe 7 zugewandten Lager 2 keinerlei Getriebeelemente zur Verteilung des durch die Mitnehmerscheibe übertragenen Drehmomentes aufweist.

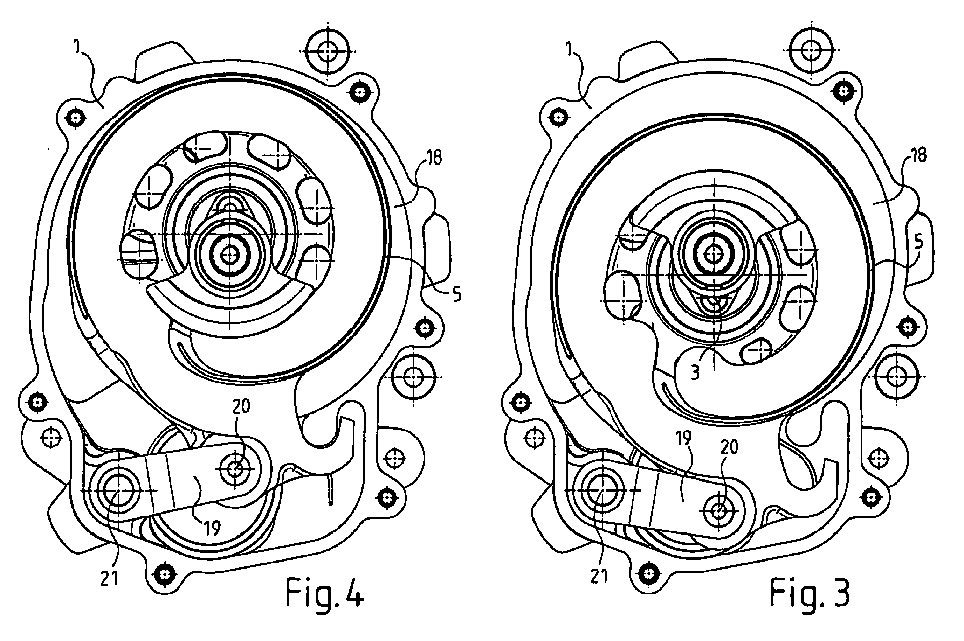

In den Figuren 3 und 4 ist erkennbar, dass das Ladeluftvolumen 18 als geschlossene, sichelförmige Kammer in der Rotation der Ladevorrichtung bewegt wird, wodurch sich die Förderung und Verdichtung der Ladeluft ergibt.

Die Verdrängerspirale 5 ist am äußeren Ende in einer Schwinge 19 gelagert. Die Lagerachse 20 der Verdrängerspirale 5 ist durch die Zwangsführung über die Schwinge 19 auf eine periodisch oszillierende Bewegung auf einem Kreissegment gezwungen. Die Schwinge 19 ist in der Schwingenachse 21 im Gehäuse 1 drehbar gelagert.

Durch diese oszillierende Lagerung der Verdrängerspirale 6 mit der Schwinge 19 ergibt sich eine Zwangsführung der Verdrängerspirale 5 ohne Totpunkte. Die Verdrängerspirale 5 wird alleine über die Laderwelle 6 angetrieben. Sämtliche Antriebs- und Führungselemente für die Verdrängerspirale sind zwischen dem vorderen und dem hinteren Lager 2, 3 angeordnet.

Die Laderwelle trägt auf der der Kupplung zugewandten Seite lediglich noch die Mitnehmerscheibe 7 für die Drehmomentübertragung. Diese wird jedoch nur in axialer Richtung belastet und überträgt keinerlei Querkräfte.

Dies ermöglicht eine entsprechend einfachere, kompaktere und identische Ausgestaltung der Laderwellenlager 2, 3. Dies ermöglicht einen größeren Raum für das Verdrängervolumen.

Durch die Anordnung des Kupplungslagers in einem Gehäuseflansch gemäß dem dargestellten Ausführungsbeispiel ist zudem eine einfache Montage der Laderkupplung sowie eine gute Zugänglichkeit im Falle von Reparatur und Wartung gewährleistet.

### Bezugszeichenliste:

- 1: Ladergehäuse
- 2: Laderwellenlager
- 3: Laderwellenlager
- 4: Exzenterlager
- 5: Verdrängerspirale
- 6: Laderwelle
- 7: Mitnehmerscheibe
- 8: Reibfläche
- 9: Riemenscheibe
- 10: Kupplungswelle
- 11: Gehäuseflansch
- 12: Lagerstutzen
- 13: Kupplungslager
- 14: Kupplungsorgan
- 15: Kupplungsscheibe
- 16: Reibbelag
- 17: Betätigungsorgan
- 18: Ladeluftvolumen
- 19: Schwinge
- 20: Lagerachse
- 21: Schwingenachse

## Patentansprüche

1. Ladevorrichtung zur Verdichtung von Ladeluft für einen Verbrennungsmotor mit einem Spiralverdichter, wobei eine Verdrängerspirale (5) zwischen einem vorderen und einem hinteren Lager der Laderwelle (6) über eine Exzenteranordnung mit der Laderwelle verbunden ist, wobei außerhalb eines Gehäuses (1) der Ladevorrichtung ein extern antreibbares Antriebselement (9), wie eine Riemenscheibe oder dergleichen vorgesehen ist und wobei die Laderwelle (6) mit dem extern antreibbaren Antriebselement (9) mittels eines steuerbaren Kupplungsorgans (14) verbindbar ist, **dadurch gekennzeichnet, dass** alle Verbindungen der zwischen der Laderwelle (6) und der Verdrängerspirale (5) wirkenden Antriebs- und/oder Führungselemente mit der Laderwelle zwischen dem vorderen (2) und dem hinteren (3) Lager angeordnet sind.

2. Ladevorrichtung zur Verdichtung von Ladeluft für einen Verbrennungsmotor mit einem Spiralverdichter, wobei eine Verdrängerspirale (5) zwischen einem vorderen und einem hinteren Lager (2, 3) der Laderwelle (6) über eine Exzenteranordnung mit der Laderwelle (6) verbunden ist, wobei außerhalb eines Gehäuses (1) der Ladevorrichtung ein extern antreibbares Antriebselement (9), wie eine Riemenscheibe oder dergleichen vorgesehen ist und wobei die Laderwelle (6) mit dem extern antreibbaren Antriebselement (9) mittels eines steuerbaren Kupplungsorgans (14) über ein an der Laderwelle (6) befestigtes Mitnehmerelement (7) des Kupplungsorgans (14) verbindbar ist, **dadurch gekennzeichnet, dass** zwischen dem an der Laderwelle (6) befestigten Mitnehmerelement (7) des Kupplungsorgans (14) und dem dem Mitnehmerelement (7) zugewandten Laderwellenlager (2) keine Kraft- oder Drehmomentverteilung vorgesehen ist.

3. Ladevorrichtung nach Anspruch 1 oder 2, **dadurch gekennzeichnet, dass** die Verdrängerspirale an einem Ende über eine mechanische Schwinge gelagert und geführt ist.

4. Ladevorrichtung nach einem der vorgenannten Ansprüche, **dadurch gekennzeichnet, dass** das Antriebselement (9) mittels eines von der Laderwelle (6) unabhängigen Lagers (13) in einem Gehäuseteil (11) gelagert ist.

5. Ladevorrichtung nach einem der vorgenannten Ansprüche, **dadurch gekennzeichnet, dass** auf das Antriebselement (9) wirkende Kräfte, insbesondere Querkräfte, über das Lager (13) des Antriebselementes (9) auf das Ladergehäuse (1) ableitbar sind.

6. Vorrichtung nach einem der vorgenannten Ansprüche, **dadurch gekennzeichnet, dass** ein gemeinsames Lager (13) für das Antriebselement (9) und eine Kupplungswelle (10) vorgesehen ist.

7. Vorrichtung nach einem der vorgenannten Ansprüche, **dadurch gekennzeichnet, dass** das Antriebselement (9) drehfest mit der Kupplungswelle (10) verbunden und über die Kupplungswelle (10) gelagert ist.

8. Vorrichtung nach einem der vorgenannten Ansprüche, **dadurch gekennzeichnet, dass** ein separat montierbares Gehäuseteil (11) mit dem Lager (13) für das Antriebselement (9) und/oder die Kupplungswelle (10) versehen ist.

9. Vorrichtung nach einem der vorgenannten Ansprüche, **dadurch gekennzeichnet, dass** die Laderwelle (6) wenigstens eine Mitnehmerscheibe (7) aufweist, die mit dem steuerbaren Kupplungsorgan (14) eine Kupplung bildet.

10. Vorrichtung nach einem der vorgenannten Ansprüche, **dadurch gekennzeichnet, dass** die Laderwelle (6) separat von der Kupplungswelle (10) und dem Kupplungsorgan (14) in dem Ladergehäuse (1) gelagert ist.

11. Vorrichtung nach einem der vorgenannten Ansprüche, **dadurch gekennzeichnet, dass** alle zur Betätigung der Kupplung vorhandenen Bauelemente aufseiten des steuerbaren Kupplungsorgans (14) angeordnet und gelagert sind.

12. Verbrennungsmotor mit Ladeluftverdichter, **dadurch gekennzeichnet, dass** eine Vorrichtung nach einem der vorgenannten Ansprüche vorgesehen ist.
